Europäisches Patentamt

(19) European Patent Office

Office européen des brevets

(11) Veröffentlichungsnummer: **0 000 497**
**B1**

(12) **EUROPÄISCHE PATENTSCHRIFT**

(45) Veröffentlichungstag der Patentschrift:
**07.01.81**

(51) Int. Cl.³: **F 16 L  59/14,** F 16 L  59/06 //
**G21C11/08**

(21) Anmeldenummer: **78100361.1**

(22) Anmeldetag: **11.07.78**

(54) Transportleitung mit keramischer Innenisolierung zur Führung heisser Fluide.

(30) Priorität: **26.07.77  DE 2733611**

(43) Veröffentlichungstag der Anmeldung:
**07.02.79 Patentblatt 79/3**

(45) Bekanntmachung des Hinweises auf die Patenterteilung:
**07.01.81 Patentblatt 81/1**

(84) Benannte Vertragsstaaten:
**CH FR GB NL**

(56) Entgegenhaltungen:
**DE-A-1 804 143**
**DE-A-2 243 995**
**GB-A-1 119 469**

(73) Patentinhaber: **Kernforschungsanlage Jülich**
**Gesellschaft mit beschränkter Haftung, Postfach 1913,**
**D-5170 Jülich (DE)**

(72) Erfinder: **Scholz, Franz, Pastorengasse 20,**
**D-4053 Jüchen 3 (DE)**

## Transportleitung mit keramischer Innenisolierung zur Führung heisser Fluide

Die Erfindung bezieht sich auf eine Transportleitung mit keramischer Innenisolierung zur Führung heisser Fluide, die innerhalb einer auf Innendruck beanspruchten äusseren Wandung zur Isolation den Strömungsraum der Transportleitung umgebende keramische Hohlkörper aufweist, die auf ihrer der äusseren Wandung zugewandten Seite von Spannelementen umschlossen werden, die die Hohlkörper im unbelasteten Zustand auf Druck vorspannen.

Eine Innenisolierung bei Transportleitungen ist erforderlich, um die meist aus metallischen Werkstoffen bestehenden, auf Innendruck beanspruchten äusseren Wandungen der Transportleitung vor einer Überhitzung zu schützen. Zur Innenisolierung sind keramische Folien oder Faserwerkstoffe und Festkeramikisolierungen bekannt. Letztere haben sich insbesondere für Spannbetonbehälter bewährt.

Bei einer keramischen Innenisolierung in einer Transportleitung für heisse Fluide treten vor allem zwei Probleme auf: Durch den erwünschten Temperaturabbau in der Innenisolierung zwischen Strömungsraum und äusserer Wandung treten an der äusseren kalten Seite der Isolierung Zugspannungen auf, die das keramische Material nur in sehr begrenztem Umfang aufnehmen kann. Die Rissgefahr bei keramischen Innenisolierungen ist infolgedessen insbesondere bei hohen Temperaturgradienten zwischen Strömungsraum und äusserer Wandung ausserordentlich hoch. Um dies zu vermeiden, wurde daher bereits vorgeschlagen, die keramische Innenisolierung in mehrere Segmente zu unterteilen, britische Patentschrift 1 119 469. Dabei lässt sich jedoch infolge der in Strömungsrichtung des Fluids bestehenden Druckgradienten eine parasitäre Gasströmung in den Fugen zwischen aneinanderliegenden Isolierungssegmenten sowie im Zwischenraum zwischen Innenisolierung und äusserer Wandung der Transportleitung nicht vermeiden. Diese unerwünschte Gasströmung setzt die Isolierwirkung in häufig unkontrollierbarer Weise stark herab, so dass örtlich für die Aufnahme der Kräfte in der Wandung unzulässig hohe Temperaturen auftreten.

Für hohen Fluiddruck und bei hohen axialen Strömungsverlusten ist es bekannt, keramische Hohlkörper mittels Spannelementen, die den Hohlkörper auf seiner äusseren Seite umschliessen, im unbelasteten Zustand auf Druck vorzuspannen, Deutsche Offenlegungsschrift 1 804 143. Werden derart vorgespannte keramische Hohlkörper in Transportleitungen mit einer äusseren drucktragenden Wandung eingesetzt, sind zumindest an den Stosstellen zwischen den einzelnen Hohlkörpern in der Transportleitung Dichtelemente erforderlich, um das Auftreten parasitärer Gasströmungen im Zwischenraum zwischen Innenisolierung und äusserer Wandung zu unterdrücken.

Aus der deutschen Offenlegungsschrift 2 243 995 ist es bekannt, als Spannelemente für den keramischen Hohlkörper verformbare, doppelwandige Ringe zu benutzen. Die gewünschte Vorspannung wird dadurch erzeugt, dass – nach Einschieben der von den Ringen umgebenen keramischen Hohlkörper in die Transportleitung – in den Hohlraum des Ringes unter Druck ein Fluid eingeleitet wird. Dabei verformt sich der Ring und verspannt sich zwischen Innenisolierung und äusserer drucktragender Wandung. Neben dem damit verbundenen Aufwand bei der Montage der Transportleitung ist es nachteilig, dass die auf diese Weise erzeugte Vorspannung in erheblichem Masse vom Betriebszustand in der Transportleitung abhängig ist und dass wegen der starren Kopplung der Innenisolierung mit der äusseren durcktragenden Wandung auch der Spannungszustand dieser Wandung beeinträchtigt wird. Darüber hinaus sind insbesondere bei häufigeren Druck- oder Temperaturänderungen unerwünschte plastische Verformungen des Ringes nicht auszuschliessen, die im kalten Zustand zu einer Lockerung der Isolation führen können.

Aufgabe der Erfindung ist es, diese Nachteile zu vermeiden und eine Transportleitung zu schaffen, deren keramische, auf Druck vorgespannte Innenisolierung in die Transportleitung ohne Beeinträchtigung der erwünschten Festigkeitseigenschaften der Innendruck beanspruchten äusseren Wandung und ohne Beeinflussung der Beanspruchung der Wandung infolge des sich bei Betrieb ändernden Dehnungs- und Spannungszustandes der Innenisolierung in einfacher Weise so einsetzbar ist, dass Gasströmungen ausserhalb des vorgesehenen Strömungsraumes in der Transportleitung vermieden werden.

Diese Aufgabe wird bei einer keramischen Innenisolierung der eingangs genannten Art gemäss der Erfindung dadurch gelöst, dass an der äusseren Wandung eine Zwischenwand gasdicht befestigt ist, mit der die Spannelemente mit einer gasdichten Umfangsnaht verschweisst sind. Das Verschweissen der Spannelemente an der Zwischenwand schliesst den Zwischenraum zwischen Innenisolierung und äusserer Wandung gasdicht ab und verhindert so eine parasitäre Fluidströmung. Ein Verschweissen ist insbesondere im Bereich von Rohranschlusstellen vorgesehen. Als Zwischenwand sind dünnwandige Rohrteile verwendbar, die vor dem Glühen der drucktragenden äusseren Wandung mit dieser verschweisst werden. Das spätere Einschweissen der Spannelemente der vorgespannten Hohlkörper verursacht somit keine Verschlechterung der erwünschten Festigkeitseigenschaften der äusseren Wandung.

Die Erfindung wird anhand eines in der Zeichnung schematisch wiedergegebenen Ausführungsbeispiels näher erläutert. Die Figuren zeigen im einzelnen

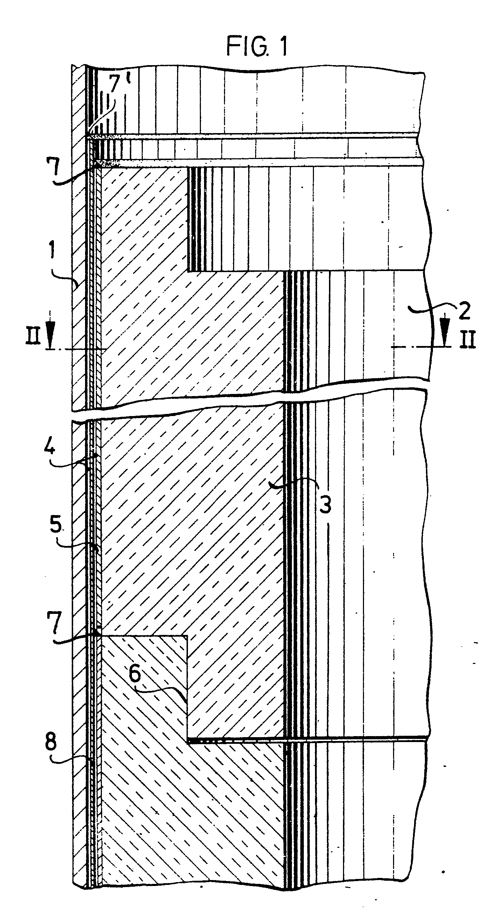

Fig. 1 Transportleitung mit keramischer Innenisolierung im Axialschnitt gemäss Schnittlinie I/I nach Fig. 2,

Fig. 2 Querschnitt einer Transportleitung nach Fig. 1 gemäss Schnittlinie II/II.

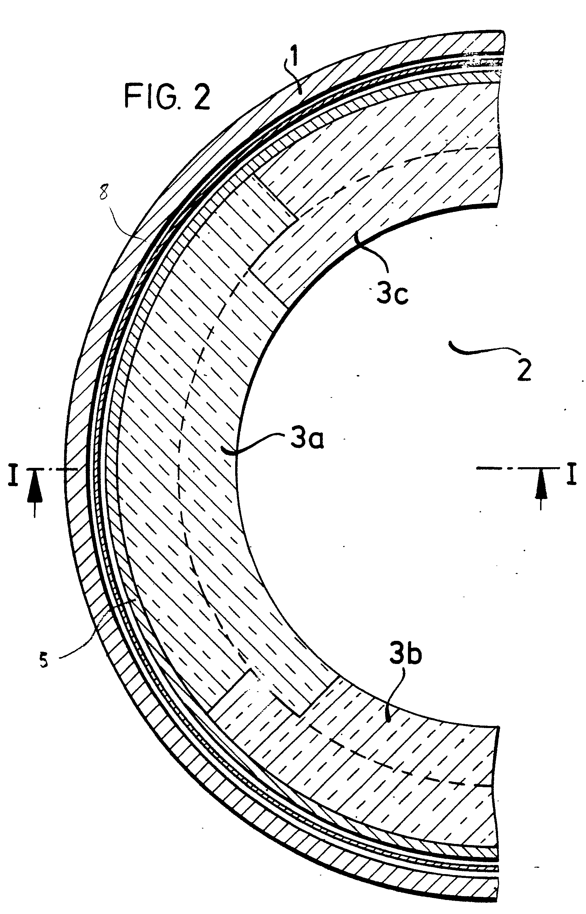

Wie aus der Zeichnung ersichtlich ist, weist die Transportleitung innerhalb einer äusseren Wandung 1 eine den Strömungsraum 2 des Fluids umgebende, als Hohlkörper 3 ausgebildete keramische Innenisolierung auf. Im Ausführungsbeispiel ist als äussere Wandung 1 ein Stahlrohr vorgesehen. Die Innenisolierung wird von mehreren Segmenten gebildet, von denen in Fig. 2 die ineinander gefügten Segmente 3a bis 3c wiedergegeben sind. Der keramische Hohlkörper 3 wird auf seiner der äusseren Wandung 1 zugewandten Seite von Spannelementen 5 umschlossen, die den Hohlkörper auf Druck vorspannen.

Als Spannelemente 5 sind Ringe vorgesehen, die in üblicher Weise auf die ineinander gefügten Segmente des Hohlkörpers 3 zur Erzielung der gewünschten Vorspannung aufgeschrumpft werden. Es entstehen so geschlossene hohlzylindrische Isolierstücke, die in die Transportleitung axial einsetzbar sind. Zentrierungen 6 sorgen für eine gegenseitige Ausrichtung der aneinandergereihten Hohlkörper.

Um eine axiale Gasströmung im Zwischenraum 4 an der äusseren Wandseite der Innenisolierung zu vermeiden, sind die Spannelemente 5 mit einer dichten Umfangsnaht 7 an einer dünnen Zwischenwand 8 gasdicht verschweisst. Die Zwischenwand 8 ist – ebenfalls gasdicht – mit der äusseren Wandung 1 verbunden und im Ausführungsbeispiel an Schweisstellen 7' mit der äusseren Wandung 1 verschweisst. Die Zwischenwand 8 verringert in vorteilhafter Weise zugleich den Zwischenraum zwischen Isolierung und äusserer Wandung, so dass Wärmeverluste sowie Unsymmetrien in der Temperaturverteilung – verursacht durch das Auftreten freier Konvektion im Zwischenraum – vermindert werden.

## Patentanspruch

1. Transportleitung mit keramischer Innenisolierung zur Führung heisser Fluide, die innerhalb einer auf Innendruck beanspruchten äusseren Wandung (1) zur Isolation den Strömungsraum der Transportleitung umgebende keramische Hohlkörper (3) aufweist, die auf ihrer der äusseren Wandung zugewandten Seite von Spannelementen (5) umschlossen werden, die die Hohlkörper im unbelasteten Zustand auf Druck vorspannen, dadurch gekennzeichnet, dass an der äusseren Wandung (1) eine Zwischenwand (8) gasdicht befestigt ist, mit der die Spannelemente (5) mit einer gasdichten Umfangsnaht (7) verschweisst sind.

## Patent claim

1. Pipeline having ceramic interior insulation for piping hot fluids, which inside an outer wall subject to internal pressure has hollow ceramic elements (3) surrounding the pipe passage to insulate it which on their sides facing the outer wall are surrounded by tensioning elements (5) which prestress the hollow elements for pressure when in the unloaded state, chracterized in that an intermediate wall (8) is mounted on the outer wall in a gastight manner, to which the tensioning elements (5) are welded by a gastight circumferential seam.

## Revendications

Dans une conduite de transport pour des fluides chauds sont placés, en vue de constituer l'isolation intérieure de la conduite de transport des corps (3) creux en céramique entourant l'espace (2) de passage du courant de fluide, à faible distance d'une paroi (1) extérieure sollicitée par la pression intérieure. Les corps (3) creux, en céramique sont soumis, à l'état non chargé, à une pression de précontrainte par des éléments (5) de contrainte qui entourent les côtés des corps creux tournés vers la paroi (1) extérieure de la conduite de transport. Pour fixer les corps creux en céramique précontraints dans la conduite de transport, une paroi (8) intermédiaire est fixée, de manière étanche aux gaz, à la paroi (1) extérieure. Les éléments (5) de contrainte sont soudés à la paroi intermédiaire.

FIG. 1

FIG. 2